# EUROPÄISCHE PATENTSCHRIFT

(11) **EP 1 224 408 B1**
(45) Veröffentlichungstag und Bekanntmachung des Hinweises auf die Patenterteilung: **01.10.2008**
(21) Anmeldenummer: 00974440.0
(22) Anmeldetag: 23.10.2000
(51) Int. Cl.: F16D 57/04, F16D 65/78, B60T 10/02

(54) **RETARDERSYSTEM**
RETARDER SYSTEM
SYSTEME RALENTISSEUR

(30) Priorität: 27.10.1999 DE 19951731
(43) Veröffentlichungstag der Anmeldung: 24.07.2002
(73) Patentinhaber: ZF FRIEDRICHSHAFEN Aktiengesellschaft, 88038 Friedrichshafen (DE)
(72) Erfinder: GAZYAKAN, Ünal, 88045 Friedrichshafen (DE); BAASCH, Detlef, 88048 Friedrichshafen (DE); ALTVATER, Roland, 88046 Friedrichshafen (DE)
(86) Internationale Anmeldenummer: PCT/EP2000/010412
(87) Internationale Veröffentlichungsnummer: WO 2001/031221

(56) Entgegenhaltungen:
- DE-A- 2 557 585
- DE-A- 19 909 690
- SCHWAB M ET AL: "EIN INTEGRIERTER HYDRODYNAMISCHER RETARDER FUER DIE NEUE ECOSPLIT- GETRIEBEREIHE" ATZ AUTOMOBILTECHNISCHE ZEITSCHRIFT,DE,FRANCKH'SCHE VERLAGSHANDLUNG. STUTTGART, Bd. 95, Nr. 5, 1. Mai 1993 (1993-05-01), Seiten 250-255, XP000362811 ISSN: 0001-2785

## Beschreibung

Die Erfindung betrifft ein Retardersystem nach der in dem Patentanspruch 1 näher definierten Art.

Aus dem Stand der Technik sind hydrodynamische Retarder bekannt, beispielsweise aus der deutschen Veröffentlichung Dubbel, "Taschenbuch für den Maschinenbau", 18. Auflage, Seiten R49-R53. Derartige Retarder werden durch Füllen und Entleeren eines beschaufelten Arbeitskreislaufes mit einem Betriebsfluid ein- oder ausgeschaltet.

Zum Einsatz kommen hydrodynamischen Retarder vor allem bei Nutzkraftfahrzeugen. Diese weisen einen Retarderkühlkreislauf auf, der zwar separat von dem eigentlichen Getriebeölkreislauf ausgebildet ist, in der Regel jedoch das Getriebeöl aus dem Getriebesumpf als eigenes Betriebsfluid verwendet.

Retarder finden in der Regel Verwendung als verschleißfreie Dauerbremsen, die mit einer Rotoreinheit versehen sind, die mit dem Getriebe des Fahrzeugs verbindbar ist und zum Abbremsen des Fahrzeugs die mechanische Energie des Getriebes in Wärmeenergie umwandelt und diese abführt. Es ist daher naheliegend, als Betriebsfluid des Retarders das Getriebeöl zu verwenden.

Aus der DE 197 51 776 A1 und der DE 196 46 598 A1 sind beispielsweise derartige hydrodynamische Retarder bekannt, bei denen der Rotor die mechanische Energie in die Energie einer Flüssigkeit umwandelt, die ihrerseits in der Rotoreinheit in Wärme umgesetzt wird, wodurch die gewünschte Bremskraft erzeugt wird.

Im allgemeinen können hydrodynamische Retarder entweder zusätzlich an das abzubremsende Getriebe gekoppelt oder bereits in dieses integriert sein. Bei einer üblichen Anordnung des hydrodynamischen Retarders ist dieser in einem Getriebe, vorzugsweise von Nutzkraftfahrzeugen, integriert und von einer Getriebeantriebswelle angetrieben, wobei, wie bereits erwähnt, das Betriebsfluid Öl aus einem Getriebesumpf darstellt.

In seiner Konstruktion und Funktionsweise ist ein Retarder mit einem hydrodynamischen Wandler vergleichbar, der in umgekehrter Arbeitsrichtung eingesetzt wird. Die bekannten hydrodynamischen Retarder sind üblicherweise mit einer Rotoreinheit und einer Statoreinheit ausgebildet, wobei die Rotoreinheit mit einer Rotorwelle und einem Rotorschaufelrad ausgebildet ist, welches mit einem Statorschaufelrad zusammenarbeitet, das zu dem Rotorschaufelrad beabstandet angeordnet ist.

Hierbei ist die Rotoreinheit des Retarders mit der Abtriebswelle des Getriebes verbunden, während die Statoreinheit fest an einem Retarder- oder Getriebegehäuse angeordnet ist. Das zwischen Rotorschaufelrad und Statorschaufelrad befindliche Betriebsfluid wird infolge der Beaufschlagung mit einem Drehmoment von der Rotoreinheit ähnlich wie bei einer Pumpe angetrieben und zirkuliert so in dem Arbeitskreislauf des Retarders. Das dabei dem Betriebsfluid abverlangte Moment wird herangezogen, um das Getriebe abzubremsen, wobei stets eine gewisse Differenzdrehzahl aufrechterhalten werden muß.

Durch die Verzögerung bzw. der Abbremsung des Rotors wird kinetische Energie vernichtet, die zu einer Erwärmung des Getriebeöls führt. Um eine Überhitzung des Retarders beziehungsweise des Öles zu verhindern, muß das erwärmte Getriebeöl beim Durchlaufen eines Kühlers in entsprechender Weise abgekühlt werden.

Ein Retarderkühlkreislauf dient der Abfuhr der Wärme, welche im Retarder erzeugt wird. Dieser umfaßt üblicherweise den Retarder mit seiner Statoreinheit und Rotoreinheit und den Kühler. Im aktivierten Zustand des Retarders ist dieser Retarderkühlkreislauf als eigentlicher Arbeitskreislauf des Retarders geschlossen, wobei über ein Regelventil und eine Retarderpumpe Betriebsfluid nachgeführt wird, welches durch innere Leckage verloren geht, um den Füllstand im System aufrechtzuerhalten. In einem deaktivierten Zustand des Retarders wird das Getriebeöl von der Retarderpumpe in Abhängigkeit der Getriebedrehzahl und somit der Geschwindigkeit des Fahrzeugs und unter Umgehung der Rotor- und Statoreinheit des Retarders durch den Kühler gefördert und anschließend in den Getriebesumpf zurückgeführt. Hierzu ist die Retarderpumpe, gegebenenfalls mittels einer Übersetzungsstufe, mit der Abtriebswelle des Getriebes verbunden, so daß der Antrieb der Retarderpumpe stets geschwindigkeitsabhängig erfolgt. Der Kühler in dem Kühlkreislauf des Retarders ist ein an sich bekannter Wärmetauscher, der mit einem Kühlwassersystem des Motors in Verbindung steht.

Bei dem vorhergehend geschilderten Aufbau aus dem Stand der Technik muß stets Bauraum für zwei Pumpen zur Förderung des Getriebeöls zur Verfügung gestellt werden, was insbesondere im Hinblick auf die zur Senkung des Kranstoffsverbrauchs erwünschte Gewichtsreduktion der Fahrzeuge als nachteilig angesehen wird. Es steht außer Frage, dass zwei Förderpumpen für mehr oder weniger den gleichen Zweck den Kostenfaktor hierfür unnötig erhöhen.

Schließlich ist aus der gattungsgemäßen DE-A-2 557 585 ein Retardersystem bei Kraftfahrzeugen bekannt, umfassend einen Retarderkühlkreislauf, der einen Retarder, einen Kühler, der mit einem Motorkühlsystem in Verbindung steht, und ein Umschaltventil aufweist, das in einer Stellung, in welcher der Retarder nicht bremsaktiviert ist, Getriebeöl aus einem Getriebesumpf über den Kühler in den Getriebesumpf zurückführt, ohne den Retarder zu durchlaufen, und das in einer anderen Stellung, in welcher der Retarder bremsaktiviert ist, den Kühler mit dem Retarder unter Ausbildung eines geschlossenen Arbeitskreislaufes verbindet. Dabei ist über mindestens ein Ventil die von dem Retarder unter Ausbildung einer erforderlichen Bremsleistung benötigte Menge des Getriebeöls als Betriebsfluid regulierbar. Ein Getriebeölkreislauf zur Getriebeschmierung, der eine Getriebepumpe zur Förderung eines Getriebeöls aus dem Getriebesumpf zu Bauteilen eines Getriebes aufweist, weist eine Verbindung zu dem Retarderkühlkreislauf auf, so dass die Getriebepumpe gleichzeitig als Förderpumpe zur Versorgung des Retarderkühlkreislaufs mit der jeweils im nicht bremsaktivierten oder bremsaktivierten Zustand des Retarders erforderlichen Menge an Getriebeöl einsetzbar ist.

Darüber hinaus ist dem grundlegenden System aus dem Stand der Technik zu eigen, dass bei einer geringen Fahrzeuggeschwindigkeit eine entsprechend geringere Menge an Getriebeöl durch den Wärmetauscher geleitet wird. Da der Grad der Kühlleistung im wesentlichen von der Durchflußmenge abhängt, ist die Kühlung des Getriebeöls bei derartigen Fällen eher ineffektiv. Der Kühler zeichnet sich dann durch einen schlechten Wirkungsgrad aus.

Des weiteren liegen gewissen Fahrsituationen bestimmte Lastzustände zugrunde, die einen erhöhten Durchfluß an Getriebeöl durch den Kühler benötigen. Zu nennen ist hier eine solche Fahrsituation, bei der eine hohe Eingangsleistung bei gleichzeitig geringer Geschwindigkeit auftritt, wie dies beispielsweise bei einer Bergfahrt eines Nutzkraftfahrzeugs unter Vollast ohne weiteres der Fall ist. Problematisch ist dabei, dass in Abhängigkeit der geringen Fahrzeuggeschwindigkeit die Getriebepumpe dem Kühler nur eine entsprechend geringe Menge an Getriebeöl zur Verfügung stellen, die für diesen Lastfall benötigte Kühlleistung jedoch nur durch eine beträchtlich größere Menge an Getriebebeöl bewerkstelligt werden kann. Der Wirkungsgrad des Kühlers ist auch für diesen Fall niedrig.

Der vorliegenden Erfindung liegt die Aufgabe zugrunde, ein Retardersystem zu schaffen, welches die vorhergehend geschilderten Nachteile des Standes der Technik auszuräumen vermag und bei dem mit einfachen Mitteln die Durchflußmenge eines Getriebeöls durch einen Kühler eines Retarders optional für bestimmte auftretende Fahrzustände zu Zwecken einer besseren Kühlleistung erhöhbar ist.

Erfindungsgemäß wird diese Aufgabe mit den Merkmalen des Patentanspruches 1 gelöst.

Der Wärmetauscher des Retarderkühlkreislaufes ist grundsätzlich für ein Vielfaches der von der Retarderpumpe bereitstellbaren Fördermenge an Getriebeöl ausgelegt, wie dies beispielsweise für den Bremszustand des Retarders, d.h. in seinem geschlossenen Arbeitskreislauf, stets der Fall sein muß. Folglich kann jederzeit eine über die normalerweise in Abhängigkeit der vorherrschenden Geschwindigkeit durch den Kühler fließende Menge hinausgehende Getriebeölmenge von diesem ohne weiteres aufgenommen werden.

Gemäß der Erfindung läßt sich so die Durchflußmenge optional erhöhen, ohne daß diese ausschließlich von der aktuellen Geschwindigkeit und des damit verbundenen Lastzustandes des Fahrzeugs abhängt. Dies ist erfindungsgemäß sowohl für eine geringe Geschwindigkeit des Fahrzeugs unter Normallast als auch unter Voll- bzw. Überlast, wie z.B. bei einer Bergfahrt, möglich.

Folglich wird gemäß der Erfindung der Retarderkühlkreislauf an den Getriebeölkreislauf angehängt, wodurch nur noch die Verwendung einer das Getriebeöl fördernden Pumpe notwendig ist. Je nach vorherrschender Temperatur oder dem vorherrschenden Lastzustand oder nach sonstigen fest einstellbaren Parameterwerten, die für den jeweiligen Fahrzustand des Fahrzeugs als relevant angesehen werden, kann dann über den erfindungsgemäßen Verteilerblock die jeweils gewünschte Menge an Getriebeöl durch den Wärmetauscher geleitet werden, wobei der erfindungsgemäße Verteilerblock die Getriebeölzuführung zu dem Getriebe einerseits nd zu dem Retarderkühlkreislauf andererseits regelt.

Die mit einer erhöhten Durchflußmenge einhergehende bessere Kühlleistung senkt die maximal auftretende Temperatur des Getriebeöls während des Kühlvorgangs, wodurch sich die Lebensdauer dieses Betriebsfluids entscheidend verlängert. Darüber hinaus erhöht sich der Wirkungsgrad des zum Einsatz kommenden Wärmetauschers. Mit einem insgesamt besseren Kühlverhalten ist auch eine spätere Rückregelung des Retarders verbunden.

Die Verwendung gemäß der Erfindung nur einer Getriebepumpe ermöglicht nicht nur eine schneller Befüllung des Retarderkühlkreislaufes als dies mit der Retarderpumpe möglich gewesen wäre, sondern auch eine hinsichtlich der zu beachtenden Parameter, wie beispielsweise Temperatur, Last, Geschwindigkeit, Drehzahl, Retarderbetriebszustand usw., intelligentere Steuerung bereits innerhalb des der Getriebepumpe nachgeschalteten Verteilerblocks.

Weitere Vorteile und Weiterbildungen der Erfindung ergeben sich aus den Unteransprüchen und aus den nachfolgend anhand der Zeichnung prinzipmäßig beschriebenen Ausführungsbeispielen.

Es zeigt
- Fig.1: eine schematische Ansicht eines erfindungsgemäßen Retardersystems, welches mit einem Getriebeölkreislauf verbindbar ist; und
- Fig.2: eine schematische Ansicht eines weiteren Ausführungsbeispiels der Erfindung.

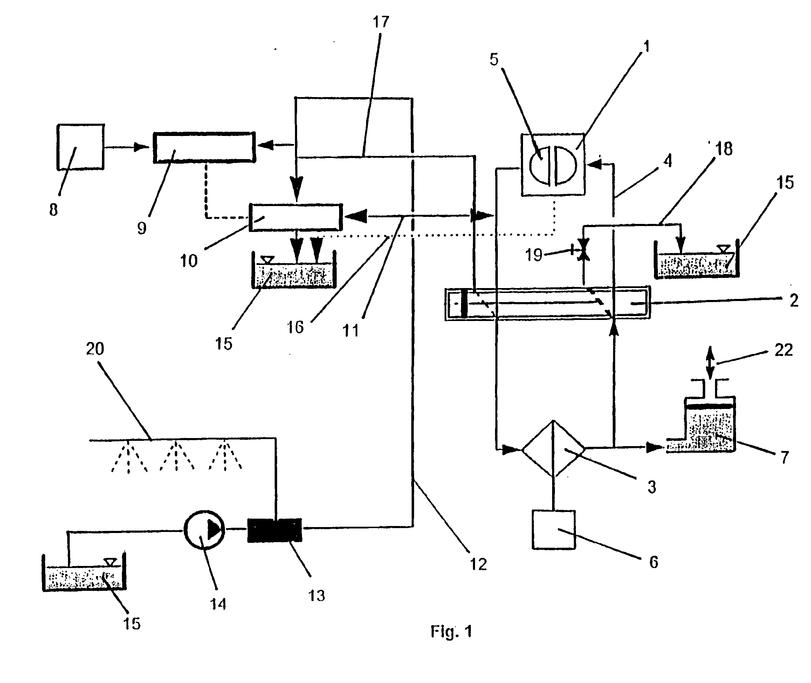

Bezug nehmend auf die Fig. 1 ist schematisch ein Retarder 1 mit den zugehörigen Kreisläufen dargestellt, welcher in ein nicht näher dargestelltes Getriebe eines Nutzkraftfahrzeuges integriert ist.

Der Retarder 1 ist im bremsaktivierten Zustand, d.h. bei einer Verzögerungseinwirkung auf das Getriebe, über ein Umschaltventil 2 mit einem einen Wärmetauscher darstellenden Kühler 3 verbunden, wobei sich ein geschlossener Arbeitskreislauf bzw. Retarderkühlkreislauf 4 ausbildet. In diesem Arbeitskreislauf 4 zirkuliert das Getriebeöl als Betriebsfluid infolge des von einem Rotor 5 des Retarders 1 beim Abbremsen des Getriebes aufgebrachten Moments. In dem Kühler 3, der mit einem symbolisch dargestellten Motorkühlsystem 6 in Verbindung steht, wird das von dem Retarder 1 erhitzte Getriebeöl abgekühlt, indem die Wärme an ein Motorkühlwasser abgegeben wird.

Im nicht bremsaktivierten Zustand ist der Retarder 1 von dem Getriebeöl entleert. Um anlaufen zu können, wird eine bestimmte Startmenge an Getriebeöl benötigt, die von einem Ölspeicher 7 kurzfristig zur Verfügung gestellt wird, nachdem das Umschaltventil 2 den Arbeitskreislauf 4 schließt. Bei Aktivierung des Retarders 1 wird der Ölspeicher 7 von dem Fahrer mittels einer hier nur angedeutet dargestellten Druckluftvorrichtung 22 betätigt, wobei die erforderliche Startmenge an Getriebeöl in den Arbeitskreislauf 4 gepumpt wird, so daß der Retarder 1 Bremsmoment erzeugen kann.

Die Bremsleistung des Retarders 1 hängt im wesentlichen von der in dem Retarder 1 bzw. in dem Arbeitskreislauf 4 zur Verfügung stehenden Menge an Getriebeöl ab. Die Bremsleistung wird über eine Bremsstufenwahl 8 mit einer Stufenregelung von dem Fahrer gewählt. Hierzu ist ein mit der Bremsstufenwahl 8 verbundenes Steuerventil 9 vorgesehen, das wiederum auf ein Regelventil 10 einwirkt. Dieses Regelventil 10 steht einerseits über eine Speiseleitung 11 mit dem Arbeitskreislauf 4 und andererseits über eine Verbindung 12 mit einem Verteilerblock 13 in Verbindung. Die einer gewählten Bremsstufe und somit einer bestimmten Bremsleistung entsprechenden Menge an Getriebeöl wird von einer Getriebepumpe 14 aus einem Getriebesumpf 15 gefördert und über das Regelventil 10 dem Arbeitskreislauf 4 zugeführt. Die Getriebepumpe 14 ist mit dem Abtrieb des Getriebes verbunden, so daß die Förderarbeit in Abhängigkeit der Drehzahl des Getriebes und damit der Geschwindigkeit des Nutzkraftfahrzeugs erfolgt.

Die Getriebepumpe 14 und das Regelventil 10 führen während des Bremsbetriebs des Retarders 1 dem Arbeitskreislauf 4 stets eine gewisse Ölmenge zu, um die beim Retarder 1 auftretenden und über eine schematisch dargestellte Leckageleitung 16 in den Getriebesumpf 13 zurückgeführten Leckageverluste auszugleichen.

Im nicht bremsaktivierten Zustand des Retarders 1 fördert die Getriebepumpe 14 das Getriebeöl unmittelbar über die Zufuhrleitung 17 zu dem nun offenen Retarderkühlkreislauf 4. In diesem Zustand des Retarders 1 ist das Umschaltventil 2, wie dies in Fig. 1 die gestrichelten Linien schematisch darstellen, so geschaltet, daß der Kühler 3 über diese Zufuhrleitung 17 direkt mit dem Verteilerblock 13 bzw. der Getriebepumpe 14 und dem Getriebesumpf 15 in Verbindung steht. Nach dem Kühler 3 wird das von der Getriebepumpe 14 geförderte Getriebeöl über die Abfuhrleitung 18 wieder in den Getriebesumpf 15 zurückgeführt. Die Abfuhrleitung 18 weist ein Druckhalteventil 19 auf, um gegenüber dem Kühler 3 zu Zwecken einer einwandfreien Funktion einen gewissen Gegendruck aufrechtzuerhalten.

Von dem Verteilerblock 13 zweigt eine Leitung zu einer Getriebeschmiervorrichtung 20 ab. Die für die Schmierung des Getriebes notwendige Menge an Getriebeöl wird ebenfalls von der Getriebepumpe 14 bereitgestellt.

Die Abzweigung der für die Getriebeschmierung notwendigen Menge an Getriebeöl einerseits und die Weiterleitung zusätzlichen Getriebeöls als Betriebsfluid an den Retarderkühlkreislauf 4 andererseits wird gemäß der Erfindung von dem Verteilerblock 13 sichergestellt, welcher mehrere Ventile herkömmlicher Bauart aufweisen kann. Der Verteilerblock 13 bzw. dessen Ventile sind elektronisch ansteuerbar, wobei deren Öffnungsverhalten in Abhängigkeit mehrerer Parameter erfolgt, wie beispielsweise der Getriebeöltemperatur und des Getriebelastzustandes.

Da die Getriebepumpe 14 zusätzlich der Speisung des Retarderkühlkreislaufes bzw. des Arbeitskreislaufes 4 dient, ist diese in entsprechender Weise für höhere Drücke ausgelegt.

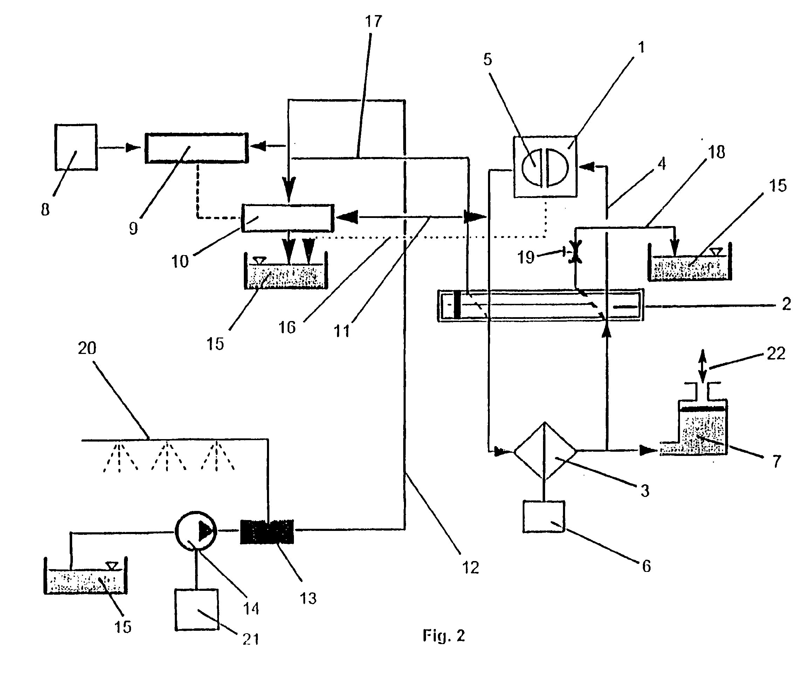

Fig. 2 zeigt schematisch eine weitere Ausführungsform der Erfindung.

Die gewünschte Erhöhung der Durchflußmenge an Getriebeöl durch den Kühler 3 läßt sich ebenfalls durch eine Kopplung der Getriebepumpe 14 mit einem zu dem Getriebe externen, üblicherweise elektrischen, Antriebsmotor 21 bewerkstelligen, welcher vorzugsweise elektronisch ansteuerbar ist. Die Getriebepumpe 14, die ansonsten drehzahlabhängig an das Getriebe gekoppelt ist, wird gemäß der Erfindung von diesem entkoppelt und von dem Elektromotor 21 angetrieben, so daß unabhängig von der Getriebedrehzahl eine insgesamt höhere Förderleistung erzielbar ist. Der Elektromotor 21 kann ebenfalls in Abhängigkeit bestimmter Parameter elektronisch angesteuert werden, so daß in Kombination mit der Steuerung des Verteilerblocks 13 stets eine für den jeweiligen Lastzustand des Getriebes und des Retarders 1 ideale Getriebeölmengenverteilung erzielt werden kann.

### Bezugszeichen

- 1: Retarder
- 2: Umschaltventil
- 3: Kühler, Wärmetauscher
- 4: Arbeitskreislauf, Retarderkühlkreislauf
- 5: Rotor
- 6: Motorkühlsystem
- 7: Ölspeicher
- 8: Bremsstufenwahl
- 9: Steuerventil
- 10: Regelventil
- 11: Speiseleitung
- 12: Verbindung
- 13: Verteilerblock
- 14: Getriebepumpe
- 15: Getriebesumpf
- 16: Leckageleitung
- 17: Zufuhrleitung
- 18: Abfuhrleitung
- 19: Druckhalteventil
- 20: Getriebeschmiervorrichtung
- 21: Elektromotor
- 22: Druckluftvorrichtung

## Patentansprüche

1. Retardersystem bei Kraftfahrzeugen, insbesondere Nutzkraftfahrzeugen, aus einem Retarderkühlkreislauf (4), der einen Retarder (1), einen Kühler (3), der mit einem Motorkühlsystem (6) in Verbindung steht, und ein Umschaltventil (2) aufweist, das in einer Stellung, in welcher der Retarder (1) nicht brems-aktiviert ist, Getriebeöl aus einem Getriebosumpf (15) über den Kühler (3) in den Getriebesumpf (15) zurückführt, ohne den Retarder (1) zu durchlaufen, und das in einer anderen Stellung, in welcher der Retarder (1) bremsaktiviert ist, den Kühler (3) mit dem Retarder (1) unter Ausbildung eines geschlossenen Arbeitskreislaufes (4) verbindet, wobei über mindestens ein Steuerventil (9) und/oder ein Regelventil (10) die von dem Retarder (1) unter Ausbildung einer erforderlichen Bremsleistung benötigte Menge des Getriebeöls als Betriebsfluid regulierbar ist, und wobei ein Getriebeölkreislauf zur Getriebeschmierung, der eine Getriebepümpe (14) zur Förderung eines Getriebeöls aus dem Getriebesumpf (15) zu Bauteilen eines Getriebes aufweist, eine Verbindung (12; 17) zu dem Retarderkühlkreislauf (4) aufweist, so dass die Getriebepumpe (14) gleichzeitig als Förderpumpe zur Versorgung des Retarderkohlkreislaufs (4) mit der jeweils im nicht bremsaktivierten oder bremsaktivierten Zustand des Retarders (1) erforderlichen Menge an Getriebeöl einsetzbar ist, **dadurch gekennzeichnet, dass** der Getriebeölkreislauf einen Verteilerblock (13) aufweist, der die Getriebeölzuführung zu dem Getriebe einerseits und zu dem Retarderkühlkreislauf (4) andererseits regelt.

2. Retardersystem nach Anspruch 1, **dadurch gekennzeichnet, dass** der Verteilerblock (13) parameterabhängig, insbesondere last- und/oder temperaturabhängig, elektronisch ansteuerbar ist.

3. Retardersystem nach einem der Ansprüche 1 oder 2, **dadurch gekennzeichnet, dass** der Verteilerblock (13) zwischen der Getriebepumpe (14) und dem Regelventil (10) angeordnet ist.

4. Retardersystem nach einem der Ansprüche 1 oder 2, **dadurch gekennzeichnet, dass** das Steuerventil (9) und/oder das Regelventil (10) in dem Verteilerblock (13) integriert sind.

5. Retardersystem nach einem der Ansprüche 1 bis 4, **dadurch gekennzeichnet, dass** die Getriebepumpe (14) mit einem Antriebsmotor (21) gekoppelt ist, so dass diese parameterabhängig ansteuerbar ist.

## Claims

1. Retarder system for motor vehicles, especially commercial vehicles, composed of a retarder cooling circuit (4) featuring a retarder (1), a cooler (3) connected to an engine cooling system (6) and a changeover valve (2), which in a position in which the retarder (1) is not brake-activated returns transmission oil from a transmission sump (15) via the cooler (3) to the transmission sump (15), with the retarder (1) being bypassed, and which in another position in which the retarder (1) is brake-activated connects the cooler (3) with the retarder (1) creating a closed operating circuit (4), with at least one control valve (9) and/or one regulating valve (10) being provided for control of the quantity of transmission oil required by the retarder (1) as operating fluid for the required braking power, and with a transmission-lubricating transmission oil circuit, which features a transmission pump (14) for delivery of transmission oil from the transmission sump (15) to components of a transmission, featuring a connection (12,17) to the retarder cooling circuit (4), so that the transmission pump (14) can simultaneously be used as a feed pump to supply the retarder cooling circuit (4) with the respective quantity of transmission oil required in the non-brake-activated or the brake-activated condition of the retarder (1), **characterized in that** the transmission oil circuit features a distributor block (13) which controls the transmission oil supply to the transmission on the one hand and to the retarder cooling circuit (4) on the other hand.

2. Retarder system according to claim 1, **characterized in that** the distributor block (13) is electronically controllable dependent on parameters, especially on load and/or temperature.

3. Retarder system according to one of the claims 1 or 2, **characterized in that** the distributor block (13) is arranged between the transmission pump (14) and the regulating valve (10).

4. Retarder system according to one of the claims 1 or 2, **characterized in that** the control valve (9) and/or the regulating valve (10) are integrated into the distributor block (13).

5. Retarder system according to one of the claims 1 thru 4, **characterized in that** the transmission pump (14) is connected to a drive motor (21), thus permitting its parameter-dependent control.

## Revendications

1. Système ralentisseur pour véhicules automobiles, notamment pour véhicules industriels, composé d'un circuit de refroidissement de ralentisseur (4), comportant un ralentisseur (1), un refroidisseur (3), celui-ci étant lié à un système de refroidissement du moteur (6), et une soupape d'inversion (2), celle-ci refoulant l'huile de boîte à partir d'un carter d'huile (15) et par l'intermédiaire du refroidisseur (3) vers le carter d'huile (15) lorsqu'elle se trouve dans une position dans laquelle le ralentisseur (1) n'est pas activé pour assurer le freinage du véhicule, sans traverser le ralentisseur (1), et que dans une autre position, dans laquelle le ralentisseur (1) est opérationnel, elle lie le refroidisseur (3) au ralentisseur (1) tout en formant un circuit de travail fermé (4), sachant qu'il est possible de régler par l'intermédiaire d'au moins une soupape de commande (9) et/ou une soupape de réglage (10) la quantité de l'huile de boîte de vitesses en tant que fluide de service nécessité par le ralentisseur (1) pour générer une puissance de freinage nécessaire, et sachant que un circuit d'huile de boîte pour la lubrification de la boîte de vitesses, celui-ci comportant une pompe de boîte (14) pour le refoulement d'une huile de boîte à partir du carter de la boîte de vitesses (15) vers des composants d'une boîte de vitesses, comporte une liaison (12; 17) vers le circuit de refroidissement du ralentisseur (4), permettant ainsi d'utiliser la pompe de la boîte de vitesses (14) en même temps en tant que pompe de refoulement pour l'alimentation du circuit de refroidissement du ralentisseur (4) avec la quantité respectivement nécessaire dans l'état pas opérationnel ou opérationnel du ralentisseur (1), **caractérisé en ce que** le circuit d'huile de la boîte de vitesses comporte un collecteur (13), celui-ci réglant d'une part l'amenée d'huile de boîte vers la boîte de vitesses et d'autre part vers le circuit de refroidissement du ralentisseur (4).

2. Système ralentisseur selon la revendication 1, **caractérisé en ce que** le collecteur (13) peut être piloté électroniquement et en fonction de paramètres, en particulier en fonction de la charge et/ou de la température.

3. Système ralentisseur selon une des revendications 1 ou 2, **caractérisé en ce que** le collecteur (13) est disposé entre la pompe de la boîte de vitesses (14) et la soupape de réglage (10).

4. Système ralentisseur selon une des revendications 1 ou 2, **caractérisé en ce que** la soupape de commande (9) et/ou la soupape de réglage (10) sont intégrées dans le collecteur (13).

5. Système ralentisseur selon une des revendications 1 à 4, **caractérisé en ce que** la pompe de boîte de vitesses (14) et couplée à un moteur d'entraînement (21), permettant ainsi de la piloter en fonction de paramètres.
